# EUROPEAN PATENT SPECIFICATION

(11) **EP 2 740 996 B1**
(45) Date of publication and mention of the grant of the patent: **14.10.2020**
(21) Application number: 13196396.9
(22) Date of filing: 10.12.2013
(51) Int. Cl.: F21V 8/00

(54) **Backlight source and assembly method of the same.**
Hintergrundbeleuchtungsquelle und Montageverfahren dafür
Source d'éclairage par l'arrière et son procédé d'assemblage

(30) Priority: 10.12.2012 CN 201210530395
(43) Date of publication of application: 11.06.2014
(73) Proprietor: BOE Technology Group Co., Ltd., Beijing 100015 (CN); BOE Optical Science And Technology Co., Ltd., Suzhou, Jiangsu 215021 (CN)
(72) Inventor: Meng, Deyu, 100176 Beijing (CN)
(74) Representative: Conti, Marco

(56) References cited:
- US-A1- 2007 058 904
- US-A1- 2008 304 802
- US-A1- 2010 321 421
- US-A1- 2012 163 023

## Description

### BACKGROUND OF THE INVENTION

### FIELD OF THE INVENTION

The present invention relates to a liquid crystal display technology. Particularly, the present invention relates to a backlight source and an assembly method of the same.

### DESCRIPTION OF THE PRIOR ART

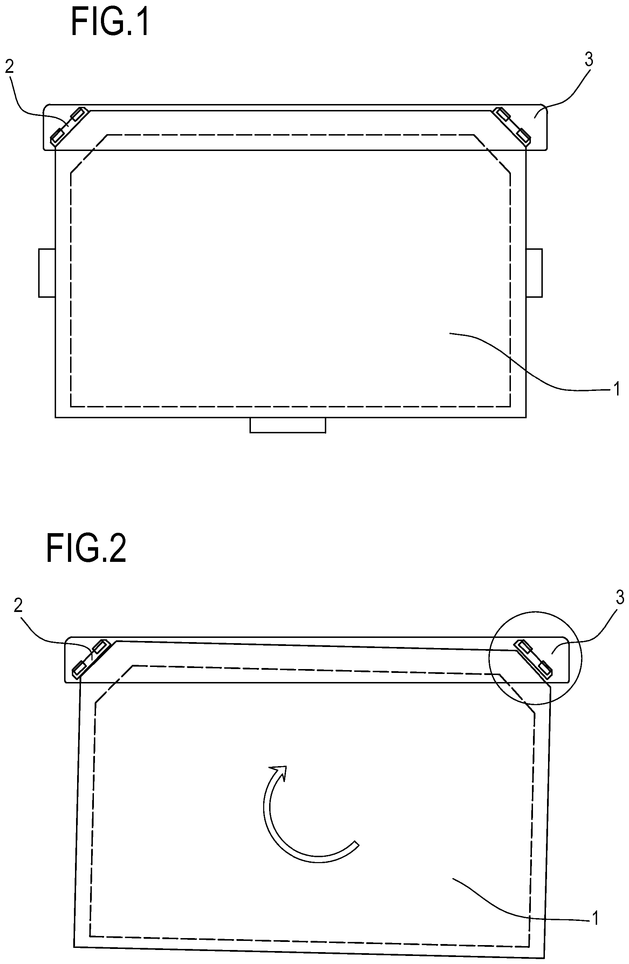

Recently, a backlight source in which a light source is arranged at a corner of a light guide plate is broadly used. Fig. 1 shows a configuration of a backlight source according to a prior art. The backlight source includes a light guide plate 1 and a member 3 having at least one light source 2. In this backlight source, the light source 2 is arranged at a corner of the light guide plate 1. In this backlight source, a proper alignment of the light source 2 with respect to the light guide plate 1 is an important problem to be solved during an assembly process.

In the backlight source according to the prior art, the alignment between the light source 2 and the light guide plate 1 is performed by a jig or by manual operation of a technician. However, the currently used jig and the assembly technology are not enough to satisfy an alignment accuracy of the backlight source. As shown in Fig. 2, when the light source 2 has a slight displacement or a slight rotation with respect to the light guide plate 1, a light leakage may occur in the backlight source.

US2010/0321421A1 discloses an optical assembly includes a plurality of light sources emitting light in a first direction at a predetermined orientation angle, and a light guide panel having a light incident section and a light emitting section.

US2012/0163023A1 discloses a thermal spacing structure is provided within a display apparatus that includes a heat-emitting light source and a thermally deformable light guide plate.

US2007/0058904A1 discloses a method for high precision alignment of a surface emitting laser and a lens in an optical module in which optical coupling between a surface emitting laser and other optical devices such as an optical fiber is realized via lenses, and a structure for providing the method.

US2008/0304802A1 discloses an optical waveguide device includes an optical waveguide section, including a waveguide core formed on a substrate, and an optical device mounted on the substrate to correspond the optical waveguide section both of which are coupled at a light end face and mounted by hybrid mounting.

### SUMMARY OF THE INVENTION

It is an object of the present invention to provide a backlight source, which reduces light leakage caused by an improper positioning of a light guide plate. It is another object of the present invention to provide an assembly method of the backlight source, which reduces light leakage caused by an improper positioning of a light guide plate. These aims are fully achieved by the device according to the invention as characterized in the appended claims.

According to an aspect of the present invention, a backlight source includes at least one light source, a printed circuit board on which a first alignment mark is formed, and a light guide plate on which a second alignment mark is formed. The light source is arranged on the printed circuit board. When the first alignment mark is aligned with the second alignment mark, the light source is arranged at an edge of the light guide plate and a light emitted from the light source is guided into the light guide plate.

Preferably, in the above-described backlight source, the first alignment mark and the second alignment mark may have the same shape and the same size.

In the above-described backlight source, the first alignment mark includes at least one first alignment side and the second alignment mark includes at least one second alignment side, which corresponds to the first alignment side. When the first alignment side and the second alignment side are arranged on the same plane that is perpendicular to the printed circuit board and the light guide plate, the first alignment mark is aligned with the second alignment mark.

Preferably, in the above-described backlight source, the first alignment mark may have a triangular shape or a cross shape, and the second alignment mark may have the triangular shape or the cross shape.

According to another aspect of the present invention, an assembly method of a backlight source includes a first step of fixing a printed circuit board on which a first alignment mark is arranged and at least one light source is arranged; a second step of capturing an image of the first alignment mark and obtaining a first image; a third step of moving a light guide plate toward the printed circuit board, a second alignment mark being arranged on the light guide plate, and capturing an image of the second alignment mark at a predetermined interval and obtaining a second image; and a fourth step of determining a positional relation between the first alignment mark and the second alignment mark based on the first image and the second image and stopping the movement of the light guide plate and fixing the light guide plate to the printed circuit board when the first alignment mark is aligned with the second alignment mark. The fourth step of the determining of the positional relation between the first alignment mark and the second alignment mark includes a step of obtaining an image of a first alignment side of the first alignment mark from the first image; and a step of obtaining an image of a second alignment side of the second alignment mark at the predetermined interval from the second image, the first alignment side corresponding to the second alignment side, and when the first alignment side and the second alignment side are arranged on a same plane that is perpendicular to the printed circuit board and the light guide plate, the first alignment mark is aligned with the second alignment mark.

Preferably, in the above-described assembly method, the second step may further include magnifying the captured image of the first alignment mark in order to obtain the first image, and the third step may further include magnifying the captured image of the second alignment mark in order to obtain the second image.

Preferably, in the above-described assembly method, the first alignment mark and the second alignment mark may have the same shape and the same size.

At least one of above-described technical solutions of the embodiments of the present invention provides the following advantages.

In the backlight source and the assembly method of the backlight source, the light guide plate and the light source are properly positioned by arranging alignment marks on the light guide plate and the printed circuit board on which the light source is arranged and the assembly of the backlight source is performed based on the alignment marks. With this configuration and assembly method, the light guide plate is properly aligned with the light source. Thus, light leakage is reduced and an assembly yield rate is increased.

### BRIEF DESCRIPTION OF THE DRAWINGS

Fig. 1 is a schematic diagram showing a configuration of a backlight source according to a prior art;
Fig. 2 is a schematic diagram showing a configuration of the backlight source according to the prior art in a case where light leakage occurs in the backlight source;
Fig. 3 is a schematic diagram showing an exploded configuration of a backlight source according to an embodiment of the present invention;
Fig. 4 is a schematic diagram showing an assembled configuration of the backlight source according to the embodiment of the present invention;
Fig. 5 is a schematic diagram showing a first structure example of a backlight source according to the embodiment of the present invention in which a first alignment mark is overlapped with a second alignment mark;
Fig. 6 is a schematic diagram showing a second structure example of a backlight source according to the embodiment of the present invention in which a first alignment mark is overlapped with a second alignment mark;
Fig 7 is a schematic diagram showing a third structure example of a backlight source according to the embodiment of the present invention in which a first alignment mark is overlapped with a second alignment mark; and
Fig. 8 is a schematic flowchart showing an assembly method of the backlight source according to the embodiment of the present invention.

### DETAILED DESCRIPTION OF THE PREFERRED EMBODIMENTS

The above objects, features and advantages of the present invention will become more apparent from the following detailed description made with reference to the accompanying drawings. The following will describe embodiments of the present invention.

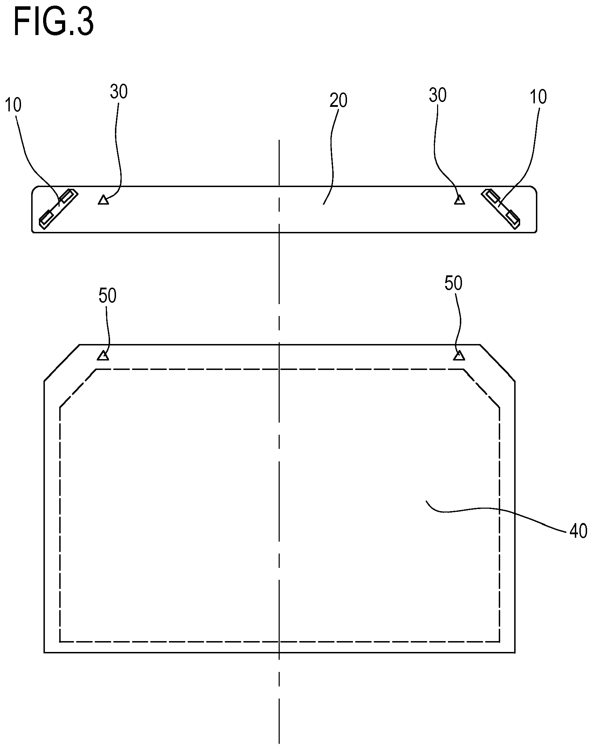

Fig. 3 is a schematic diagram showing an exploded configuration of the backlight source according to an embodiment of the present invention. As shown in Fig. 3, the backlight source includes at least one light source 10, a printed circuit board 20, and a light guide plate 40.

The light source 10 may be provided by a light emitting diode (LED). The light source 10 is arranged on the printed circuit board 20.

The printed circuit board 20 includes circuits for controlling turn-on and turn-off of the light source 10. The printed circuit board 20 further includes a first alignment mark 30, which is formed on the printed circuit board 20.

The light guide plate 40 includes a second alignment mark 50, which is formed on the guide plate 40. When the first alignment mark 30 is aligned with the second alignment mark 50, the light source 10 is positioned at an edge of the light guide plate 40 and a light emitted from the light source 10 is guided into the light guide plate 40.

The second alignment mark 50 is formed at a predetermined position of the light guide plate 40 during the process of forming the light guide plate 40. The first alignment mark 30 is formed at a predetermined position of the printed circuit board 20 by photolithography, etching or the like. In the present embodiment, the first alignment mark 30 has the same shape and size with the second alignment mark 50. Further, the first alignment mark 30 may have different shape and size from the second alignment mark 50. The shape of the first alignment mark 30 and the second alignment mark 50 may include a triangular shape "Δ" or a cross shape "+".

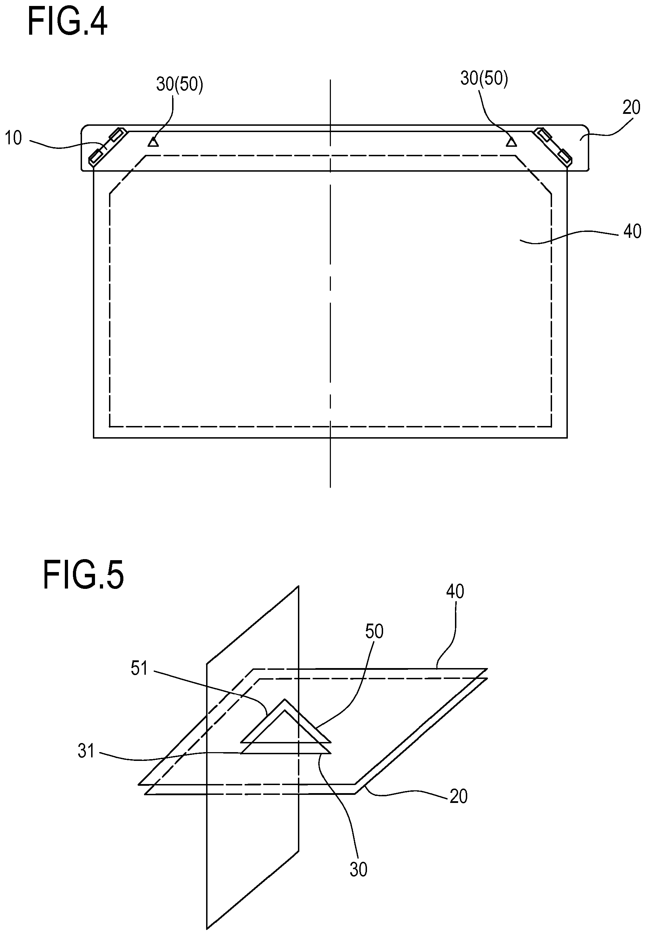

The following will describe the backlight source according to the present embodiment in which the first alignment mark 30 and the second position mark 50 have the same size and have the same triangular shape "Δ". As shown in Fig. 4, when the printed circuit board 20 is properly assembled with the light guide plate 40, the first alignment mark 30 is overlapped with the second alignment mark 50 on an imaginary plane that is perpendicular to the light guide plate 40 and the printed circuit board 20.

More specifically, as shown in Fig. 5, the first alignment mark 30 includes a first alignment side 31, and the second alignment mark 50 includes a second alignment side 51. When the light guide plate 40 is properly assembled with the printed circuit board 20, the first alignment side 31 and the second alignment side 51 are arranged on the imaginary plane, which is perpendicular to the printed circuit board 20 and the light guide plate 40. That is, the first alignment side 31 is overlapped with the second alignment side 51. Similarly, other alignment sides of the first alignment mark 30 are overlapped with respective alignment sides of the second alignment mark 50.

The predetermined position of the first alignment mark 30 on the printed circuit board 20 is aligned with the predetermined position of the second alignment mark 50 on the light guide plate 40 when the printed circuit board 20 is properly assembled with the light guide plate 40.

With above-described configuration, when assembling the backlight source, an image of the alignment mark 30 and an image of the second alignment mark 50 are captured by an image capturing apparatus and the captured images are magnified. Then, moving the light guide plate 40 or the printed circuit board 20 in order to make the image of the first alignment mark 30 is overlapped with the image of the second alignment mark 50, thereby the light guide plate 40 and the printed circuit board 20 are properly positioned. With above-described method, a light leakage is reduced, an assembly yield rate is increased, reproduce times is decreased, and production capacity is increased.

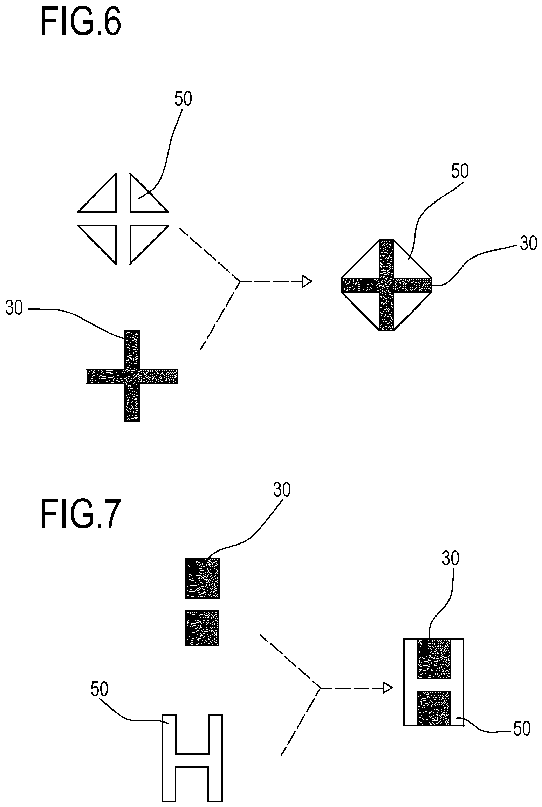

In the present embodiment, the shape of the first alignment mark 30 and the shape of the second alignment mark 50 have the triangular shape "Δ". However, the shape of the first alignment mark 30 and the shape of the second alignment mark 50 are not limited to the triangular shape or the above-described cross shape. Further, the first alignment mark 30 and the second alignment mark 50 are not limited to have the same shape and the same size. As shown in Fig. 6 and Fig. 7, when the first alignment mark 30 has different shape and size from the second alignment mark 50, a positioning alignment between the light guide plate 40 and the printed circuit board 20 can be achieved by the first alignment mark 30 and the second alignment mark 50. In this case, a left-right direction, an up-down direction, and a rotation direction are required to be distinguished for the aligning of the shapes of the alignment marks 30, 50.

As shown in Fig. 3 and Fig. 4, in the backlight source according to the present embodiment of the present invention, the light source 10 is arranged at an edge of the light guide plate 40.

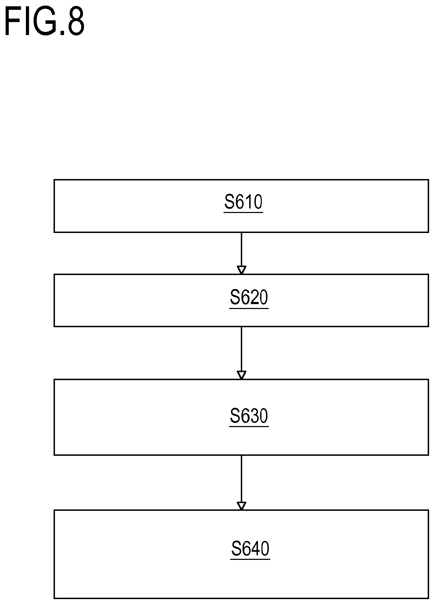

The following will describe an assembly method of the backlight source, which is shown in Fig. 3 and Fig. 4, as another aspect of the present embodiment of the present invention with reference to Fig. 8.

The assembly method is shown in Fig 8 in detail. At step S610, the printed circuit board 20 having at least one light source 10 is assembled to a target. The first alignment mark 30 is formed on the printed circuit board 20. At step S620, an image of the first alignment mark 30 is captured and a first image is obtained. At step S630, the light guide plate 40 on which the second alignment mark 50 is arranged is moved toward the printed circuit board 20. Further, the image of the second alignment mark 50 is captured at a predetermined interval (i.e. predetermined time interval) and the second image is obtained. At step S640, a positional relation between the first alignment mark 30 and the second alignment mark 50 is determined based on the first image and the second image. When the first alignment mark 30 is aligned with the second alignment mark 50, a movement of the light guide plate 40 is stopped and the light guide plate 40 is fixed to the printed circuit board 20.

Step S620 further includes a step of magnifying the captured image of the first alignment mark 30. Step S630 further includes a step of magnifying the captured image of the second alignment mark 50. By magnifying the captured images of the first alignment mark 30 and the second alignment mark 50, the first alignment mark 30 and the second alignment mark 50 are distinguished clearly and easily when determining whether the first alignment mark 30 is accurately aligned with the second alignment mark 50.

The first alignment mark 30 and the second alignment mark 50 are preferred to have the same shape and the same size. The following will describe in a case where the first alignment mark 30 and the second alignment mark 50 have the triangular shape as shown in Fig. 3, Fig. 4, and Fig. 5. In this case, step S640, which determines the positional relation between the first alignment mark 30 and the second alignment mark 50, further includes obtaining an image of the first alignment side 31 of the first alignment mark 30 from the first image; obtaining an image of the second alignment side 51 of the second alignment mark 50 that is corresponding to the first alignment side 31 from the second image that is captured at the predetermined interval; and determining that the first alignment mark 30 is accurately aligned with the second alignment mark 50 when the first alignment side 31 and the second alignment side 51 are arranged on the same imaginary plane perpendicular to the printed circuit board 20 and the light guide plate 40.

Further, suppose that the first image of the first alignment mark 30 and the second image of the second alignment mark 50 are captured by the same image capturing apparatus and the image capturing apparatus is fixed at a position right above the first alignment mark 30. In this case, whether the first alignment side 31 and the second alignment side 51 are arranged on the same imaginary plane, which is perpendicular to the printed circuit board 20 and the light guide plate 40, may be determined by comparing a length of the first alignment side 31 in the first image with a length of the second alignment side 51 of the second image. When the length of the first alignment side 31 is the same with the length of the second alignment side 51, a position of the first alignment side 31 with respect to the image capturing apparatus is the same with a position of the second alignment side 51 with respect to the image capturing apparatus. That is, when the length of the first alignment side 31 is the same with the length of the second alignment side 51, the first alignment side 31 and the second alignment side 51 are arranged on the same plane that is perpendicular to the printed circuit board 20 and the light guide plate 40. When the length of the first alignment side 31 is different from the length of the second alignment side 51, the position of the first alignment side 31 with respect to the image capturing apparatus is different from the position of the second alignment side 51 with respect to the image capturing apparatus. That is, when the length of the first alignment side 31 is different from the length of the second alignment side 51, the first alignment side 31 and the second alignment side 51 are arranged on different planes. Similarly, other sides of the first alignment mark 30 and other sides of the second alignment mark 50 may be used to determine whether the first alignment mark 30 and the second alignment mark 50 are arranged on the same plane that is perpendicular to the printed circuit board 20 and the light guide plate 40.

In the backlight source and the assembly method of the backlight source according to the above embodiments of the present invention, the alignment marks are arranged on the light guide plate and the printed circuit board having the light source, and the backlight source is assembled based on the alignment marks. Thus, an alignment of the light guide plate with respect to the light source is performed with a high accuracy. Thus, a light leakage is reduced and an assembly yield rate is increased.

The above described embodiments are preferred embodiments of the present invention. However, it will be obvious to those skilled in the art that various changes and improvements may be made in the above-described embodiments of the present invention, as long as they fall within the scope of the appended claims.

With reference to figure 8:
- reference S610 indicates the step of fixing a printed circuit board on which a first alignment mark is arranged and at least one light source is arranged;
- reference S620 indicates the step of capturing an image of the first alignment mark and obtaining a first image;
- reference S630 indicates the step of moving the light guide plate towards the printed circuit board on which a second alignment mark is arranged and capturing an image of the second alignment mark at a preset interval and obtaining a second image;
- reference S640 indicates the step of determining a positional relation between the first alignment mark and the second alignment mark based on the first image and the second image and stopping the movement of the light guide plate and fixing the light guide plate to the printed circuit board when the first alignment mark is aligned with second alignment mark.

Preferably, an area occupied by the first alignment mark 30 on the printed circuit board 20 and area occupied by the second alignment mark 50 on the guide plate 40 at least partially overlap, whereby at least one first alignment side 31 of the first alignment mark 30 and at least one second alignment side 51 of the second alignment mark 50 overlap.

Preferably, light guide plate 40 defines a reference plane, wherein the second alignment mark 50 lays on said reference plane; the light source 10, projected on said reference plane, has a predefined, desired position with respect to the light guide plate 40; the second alignment mark 50 has a geometrical relation with said predefined position, which corresponds to (in particular, is the same as) a geometrical relation between the first alignment mark 30 and a position of the light source 10.

## Claims

1. A backlight source comprising:
a printed circuit board (20) on which a first alignment mark (30) is arranged;
at least one light source (10) which is arranged on the printed circuit board (20); and a light guide plate (40) on which a second alignment mark (50) is arranged,
wherein, when the first alignment mark (30) is aligned with the second alignment mark (50), the light source (10) is arranged at an edge of the light guide plate (40) and a light emitted from the light source (10) is guided into the light guide plate (40),
**characterized in that**,
the first alignment mark (30) includes at least one first alignment side (31) and the second alignment mark (50) includes at least one second alignment side (51), which corresponds to the first alignment side (31), and wherein, when the first alignment side (31) and the second alignment side (51) are arranged on a same plane that is perpendicular to the printed circuit board (20) and the light guide plate (40), the first alignment mark (30) is aligned with the second alignment mark (50).

2. The backlight source according to claim 1, wherein the first alignment mark (30) and the second alignment mark (50) have a same shape and a same size.

3. The backlight source according to claim 1 or 2, wherein the first alignment mark (30) has a triangular shape or a cross shape, and wherein the second alignment mark (50) has the triangular shape or the cross shape.

4. An assembly method of a backlight source comprising: a first step (S610) of fixing a printed circuit board (20) on which a first alignment mark (30) is arranged and at least one light source (10) is arranged;
a second step (S620) of capturing an image of the first alignment mark (30) and obtaining a first image;
a third step (S630) of moving a light guide plate (40) towards the printed circuit board (20), a second alignment mark (50) being arranged on the light guide plate (40), and capturing an image of the second alignment mark (50) at a predetermined interval and obtaining a second image; and
a fourth step (S640) of determining a positional relation between the first alignment mark (30) and the second alignment mark (50) based on the first image and the second image and stopping the movement of the light guide plate (40) and fixing the light guide plate (40) to the printed circuit board (20) when the first alignment mark (30) is aligned with the second alignment mark (50),
**characterized in that**,
the step of the determining of the positional relation between the first alignment mark (30) and the second alignment mark (50) further includes:
- a step of obtaining an image of a first alignment side (31) of the first alignment mark (30) from the first image; and
- a step of obtaining an image of a second alignment side (51) of the second alignment mark (50) at the predetermined interval from the second image, the first alignment side (31) corresponding to the second alignment side (51), and wherein, when the first alignment side (31) and the second alignment side (51) are arranged on a same plane that is perpendicular to the printed circuit board (20) and the light guide plate (40), the first alignment mark (30) is aligned with the second alignment mark (50).

5. The assembly method according to claim 4, wherein the second step_ (S620) further includes magnifying the captured image of the first alignment mark (30) in order to obtain the first image, and
wherein the third step further includes magnifying the captured image of the second alignment mark (50) in order to obtain the second image.

6. The assembly method according to claim 4 or 5, wherein the first alignment mark (30) and the second alignment mark (50) have a same shape and a same size.

## Patentansprüche

1. Hintergrundbeleuchtungsquelle, umfassend:
eine Leiterplatte (20), auf der eine erste Ausrichtungsmarkierung (30) angeordnet ist;
mindestens eine Lichtquelle (10), die auf der Leiterplatte (20) angeordnet ist, und eine Lichtführungsplatte (40), auf der eine zweite Ausrichtungsmarkierung (50) angeordnet ist,
wobei die Lichtquelle (10) an einer Kante der Lichtführungsplatte (40) angeordnet ist, wenn die erste Ausrichtungsmarkierung (30) mit der zweiten Ausrichtungsmarkierung (50) ausgerichtet ist, und ein von der Lichtquelle (10) emittiertes Licht in die Lichtführungsplatte (40) geführt wird,
**dadurch gekennzeichnet, dass**
die erste Ausrichtungsmarkierung (30) mindestens eine erste Ausrichtungsseite (31) umfasst und die zweite Ausrichtungsmarkierung (50) mindestens eine zweite Ausrichtungsseite (51) umfasst, die der ersten Ausrichtungsseite (31) entspricht, und wobei die erste Ausrichtungsmarkierung (30) mit der zweiten Ausrichtungsmarkierung (50) ausgerichtet ist, wenn die erste Ausrichtungsseite (31) und die zweite Ausrichtungsseite (51) auf einer selben Ebene angeordnet sind, die senkrecht zur Leiterplatte (20) und zur Lichtführungsplatte (40) verläuft.

2. Hintergrundbeleuchtungsquelle nach Anspruch 1, wobei die erste Ausrichtungsmarkierung (30) und die zweite Ausrichtungsmarkierung (50) dieselbe Form und dieselbe Größe aufweisen.

3. Hintergrundbeleuchtungsquelle nach Anspruch 1 oder 2, wobei die erste Ausrichtungsmarkierung (30) eine dreieckige Form oder eine Kreuzform aufweist, und wobei die zweite Ausrichtungsmarkierung (50) die dreieckige Form oder die Kreuzform aufweist.

4. Montageverfahren für eine Hintergrundbeleuchtungsquelle, umfassend: einen ersten Schritt (S610) zum Fixieren einer Leiterplatte (20), auf der eine erste Ausrichtungsmarkierung (30) und mindestens eine Lichtquelle (10) angeordnet sind; einen zweiten Schritt (S620) zum Erfassen eines Bilds der ersten Ausrichtungsmarkierung (30) und zum Erhalten eines ersten Bilds;
einen dritten Schritt (S630) zum Bewegen einer Lichtführungsplatte (40) hinführend zur Leiterplatte (20), wobei eine zweite Ausrichtungsmarkierung (50) auf der Lichtführungsplatte (40) angeordnet ist, und zum Erfassen eines Bilds der zweiten Ausrichtungsmarkierung (30) an einem vorgegebenen Intervall und zum Erhalten eines zweiten Bilds, und
einen vierten Schritt (S640) zum Ermitteln einer Positionsbeziehung zwischen der ersten Ausrichtungsmarkierung (30) und der zweiten Ausrichtungsmarkierung (50), basierend auf dem ersten Bild und dem zweiten Bild, und zum Stoppen der Bewegung der Lichtführungsplatte (40) und zum Fixieren der Lichtführungsplatte (40) an der Leiterplatte (20), wenn die erste Ausrichtungsmarkierung (30) mit der zweiten Ausrichtungsmarkierung (50) ausgerichtet ist,
**dadurch gekennzeichnet, dass**
der Schritt zum Ermitteln der Positionsbeziehung zwischen der ersten Ausrichtungsmarkierung (30) und der zweiten Ausrichtungsmarkierung (50) zudem umfasst:
- einen Schritt zum Erhalten eines Bilds einer ersten Ausrichtungsseite (31) der ersten Ausrichtungsmarkierung (30) vom ersten Bild und
- einen Schritt zum Erhalten eines Bilds der zweiten Ausrichtungsseite (51) der zweiten Ausrichtungsmarkierung (50) am vorgegebenen Intervall vom zweiten Bild, wobei die erste Ausrichtungsseite (31) der zweiten Ausrichtungsseite (51) entspricht und wobei die erste Ausrichtungsmarkierung (30) mit der zweiten Ausrichtungsmarkierung (50) ausgerichtet ist, wenn die erste Ausrichtungsseite (31) und die zweite Ausrichtungsseite (51) auf derselben Ebene angeordnet sind, die senkrecht zur Leiterplatte (20) und zur Lichtführungsplatte (40) verläuft.

5. Montageverfahren nach Anspruch 4, wobei der zweite Schritt (S620) zudem das Vergrößern des erfassten Bilds der ersten Ausrichtungsmarkierung (30) umfasst, um das erste Bild zu erhalten, und
wobei der dritte Schritt zudem das Vergrößern des erfassten Bilds der zweiten Ausrichtungsmarkierung (50) umfasst, um das zweite Bild zu erhalten.

6. Montageverfahren nach Anspruch 4 oder 5, wobei die erste Ausrichtungsmarkierung (30) und die zweite Ausrichtungsmarkierung (50) dieselbe Form und dieselbe Größe aufweisen.

## Revendications

1. Source de rétroéclairage comprenant :
une carte de circuit imprimé (20) sur laquelle est disposé un premier repère d'alignement (30) ;
au moins une source lumineuse (10) étant disposée sur la carte de circuit imprimé (20) ; et une plaque de guidage (40) de lumière sur laquelle est disposé un deuxième repère d'alignement (50),
dans laquelle, lorsque le premier repère d'alignement (30) est aligné avec le deuxième repère d'alignement (50), la source lumineuse (10) est disposée sur un bord de la plaque de guidage (40) de lumière et une lumière émise par la source lumineuse (10) est guidée dans la plaque de guidage (40) de lumière,
**caractérisée en ce que**
le premier repère d'alignement (30) comprend au moins un premier côté d'alignement (31) et le deuxième repère d'alignement (50) comprend au moins un deuxième côté d'alignement (51) qui correspond au premier côté d'alignement (31), et dans laquelle, lorsque le premier côté d'alignement (31) et le deuxième côté d'alignement (51) sont disposés sur un même plan étant perpendiculaire à la carte de circuit imprimé (20) et à la plaque de guidage (40) de lumière, le premier repère d'alignement (30) est aligné avec le deuxième repère d'alignement (50).

2. Source de rétroéclairage selon la revendication 1, dans laquelle le premier repère d'alignement (30) et le deuxième repère d'alignement (50) ont une même forme et une même dimension.

3. Source de rétroéclairage selon la revendication 1 ou 2, dans laquelle le premier repère d'alignement (30) a une forme triangulaire ou une forme en croix, et dans laquelle le deuxième repère d'alignement (50) a la forme triangulaire ou la forme en croix.

4. Procédé d'assemblage d'une source de rétroéclairage comprenant : une première étape (S610) consistant à fixer une carte de circuit imprimé (20) sur laquelle un premier repère d'alignement (30) est disposé et au moins une source lumineuse (10) est disposée ;
une deuxième étape (S620) consistant à capturer une image du premier repère d'alignement (30) et à obtenir une première image ;
une troisième étape (S630) consistant à déplacer une plaque de guidage (40) de lumière vers la carte de circuit imprimé (20), un deuxième repère d'alignement (50) étant disposé sur la plaque de guidage (40) de lumière, et à capturer une image du deuxième repère d'alignement (30) à un intervalle prédéterminé et à obtenir une deuxième image ; et
une quatrième étape (S640) consistant à déterminer une relation de position entre le premier repère d'alignement (30) et le deuxième repère d'alignement (50) sur la base de la première image et de la deuxième image et à arrêter le mouvement de la plaque de guidage (40) de lumière et à fixer la plaque de guidage (40) de lumière sur la carte de circuit imprimé (20) lorsque le premier repère d'alignement (30) est aligné avec le deuxième repère d'alignement (50),
**caractérisé en ce que**
l'étape consistant à déterminer la relation de position entre le premier repère d'alignement (30) et le deuxième repère d'alignement (50) inclut de plus :
- une étape consistant à obtenir une image d'un premier côté d'alignement (31) du premier repère d'alignement (30) à partir de la première image ; et
- une étape consistant à obtenir une image d'un deuxième côté d'alignement (51) du deuxième repère d'alignement (50) à l'intervalle prédéterminé de la deuxième image, le premier côté d'alignement (31) correspondant au deuxième côté d'alignement (51), et dans lequel, lorsque le premier côté d'alignement (31) et le deuxième côté d'alignement (51) sont disposés sur un même plan étant perpendiculaire à la carte de circuit imprimé (20) et à la plaque de guidage (40) de lumière, le premier repère d'alignement (30) est aligné avec le deuxième repère d'alignement (50).

5. Procédé d'assemblage selon la revendication 4, dans lequel la deuxième étape (S620) comprend de plus l'agrandissement de l'image capturée du premier repère d'alignement (30) afin d'obtenir la première image, et dans lequel la troisième étape inclut de plus l'agrandissement de l'image capturée du deuxième repère d'alignement (50) afin d'obtenir la deuxième image.

6. Procédé d'assemblage selon la revendication 4 ou 5, dans lequel le premier repère d'alignement (30) et le deuxième repère d'alignement (50) ont une même forme et une même dimension.
